# EUROPÄISCHE PATENTANMELDUNG

(11) **EP 1 398 207 A2**
(43) Veröffentlichungstag der Anmeldung: **17.03.2004**
(21) Anmeldenummer: 03020237.8
(22) Anmeldetag: 06.09.2003
(51) Int. Cl.: B60P 3/20

(54) **Kühlfahrzeug**

(30) Priorität: 12.09.2002 DE 20214161 U
(71) Anmelder: Kühlfahrzeugbau Werner Brandt, 32699 Extertal (DE)
(72) Erfinder: Brandt, Werner, 32699 Extertal (DE)
(74) Vertreter: Specht, Peter, Dipl.-Phys.

(57) **Zusammenfassung**

Ein Kühlfahrzeug, welches zum Ausliefern von Gefriergut an den Endverbraucher ausgelegt ist, und welches einen kofferartigen, durch Trennwände in Fächer unterteilten Aufbau aufweist und an dessen Wänden Türen angeschlagen sind, soll so gestaltet werden, dass die Waren mit relativ geringen Abmessungen, sogenannte Kleinwaren, mitgeführt werden können, ohne dass eine vorbestimmte Stückzahl in einem Karton verpackt werden muß.

Erfindungsgemäß sind im Laderaum Auszüge (15) vorgesehen, die zur Entnahme von Gefriergut aus dem von den Wänden begrenzenden Laderaum herausziebar sind. Diese Auszüge sind nach Art einer Schublade nebeneinander angeordnet. Darüber hinaus sind diese Auszüge im unteren Drittel des Laderaumes und direkt über dem Boden angeordnet. Das erfindungsgemäße Kühlfahrzeug ist zum Ausliefern von Gefriergut an den Endverbraucher ausgelegt.

## Beschreibung

Die Erfindung betrifft ein Kühlfahrzeug, insbesondere zum Ausliefern von Gefriergut, mit einem kofferartigen, durch Trennwände in Fächer unterteilten Aufbau, an dessen Wänden Türen angeschlagen sind.

Das in Rede stehende Kühlfahrzeug wird insbesondere zum Ausliefern von Gefriergut an den Endverbraucher verwendet. Es ist deshalb erforderlich, daß das mitgeführte Sortiment eine relativ hohe Anzahl von unterschiedlichem Gefriergut enthält. Es ist deshalb eine Unterteilung des Laderaumes notwendig, damit der Verkaufsfahrer die Bestellung in möglichst kurzer Zeit zusammenstellen kann. Die einzelnen Fächer sind dann auch noch durch Böden unterteilt. Das Zusammenstellen der Bestellung in kürzester Zeit ist u.a. auch deshalb notwendig, da die Türen des Aufbaus möglichst geschlossen sein sollten, da durch geöffnete Türen ein beachtlicher Kälteverlust eintritt.

In dem mitgeführten Sortiment sind Waren, die in Kartons verpackt sind. Diese Waren sind besonders leicht zu finden, da innerhalb eines Faches bzw. oberhalb eines Fachbodens gleiche oder gleichartige Ware gelagert werden kann. Es wird jedoch auch Ware angeboten, deren Größe relativ klein ist, beispielsweise Speiseeis. Derartige Waren sind in einer bestimmten Stückzahl in einem Karton verpackt, aus dem sie dann nach vorliegen der Bestellung herausgenommen werden müssen. Derartige Waren sind also für den Verkaufsfahrer nicht sichtbar, woraus sich ergibt, daß beispielsweise mehrere Kartons geöffnet werden müssen, um den Inhalt festzustellen. Dieses Suchen ist für den Verkaufsfahrer relativ zeitaufwendig und durch die geöffneten Türen entsteht ein beachtlicher Kälteverlust.

Der Erfindung liegt die Aufgabe zugrunde, ein Kühlfahrzeug der eingangs näher beschriebenen Art so zu gestalten, daß Ware mit relativ geringen Abmessungen, die auch als Kleinware bezeichnet werden kann, mitgeführt werden kann, ohne daß eine vorbestimmte Stückzahl in einem Karton verpackt werden muß.

Die gestellte Aufgabe wird gelöst, indem im Laderaum Auszüge vorgesehen sind, die zur Entnahme von Gut aus dem von den Wänden begrenzten Laderaum herausziehbar sind.

Diese ausziehbaren Auszüge sind so ausgelegt, daß sie bestimmte Waren aufnehmen können, die aus einer Umverpackung, beispielsweise einem Karton herausgenommen worden sind. Dadurch wird für den Fahrer sichtbar, welches Gut sich in dem Auszug befindet. Da verschiedenartige Güter in einem Auszug enthalten sind, kann er das bestellte Gut direkt herausnehmen, so daß das lästige Öffnen von mehreren Kartons entfällt.

In weiterer Ausgestaltung ist vorgesehen, daß jeder Auszug kastenförmig bzw. nach Art einer Schublade gestaltet ist. Diese Schublade ist nach oben offen, so daß das Einfüllen und Herausnehmen der Ware durch das Einsehen begünstigt wird. In einer bevorzugten Ausführung ist vorgesehen, daß mehrere Auszüge bzw. Schubladen nebeneinander im unteren Bereich des Aufbaus angeordnet sind. Durch die Anordnung im unteren Bereich können auch kleinere Personen die Schublade bzw. den Auszug einsehen. Besonders vorteilhaft ist, wenn die Auszüge bzw. die Schubladen direkt oberhalb des Bodens des Aufbaus angeordnet sind. Damit der Verkaufsfahrer nicht versehentlich den Auszug bzw. die Schublade so weit herauszieht, daß sie auf den Boden fällt, ist vorgesehen, daß am Auszug bzw. an der Schublade oder am Fahrzeugaufbau Endanschläge angeordnet sind. Die Höhe des Schubkastens kann variiert werden. Es ist jedoch vorgesehen, daß die Höhe mit dem Abstand von zwei Fachböden eines Faches übereinstimmt oder annähernd übereinstimmt. Vorzugsweise sollte die Höhe des Schubkastens ein klein wenig geringer sein. Die vordere, den Seitenwänden des Aufbaus zugewandte Blende eines Schubkastens ist zur besseren Handhabung mit einer Handhabe ausgestattet. Die Schubkästen können aus Blech mit einer geeigneten Oberflächenbeschichtung gefertigt sein oder sie könnten auch aus einem Kunststoff im Spritzgießverfahren hergestellt werden.

Anhand der beiliegenden Zeichnung wird die Erfindung noch näher erläutert. Es zeigt:

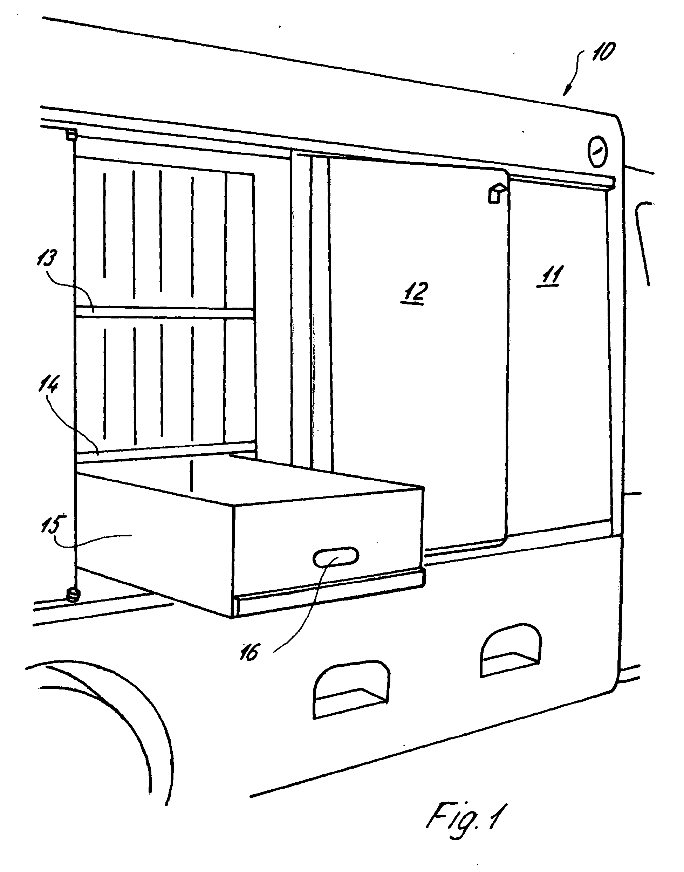

- Figur 1: das erfindungsgemäße Kühlfahrzeug in einer Teilansicht.

Aus Gründen der vereinfachten Darstellung ist das Kühlfahrzeug in seiner Gesamtheit nicht dargestellt. Der Aufbau 10 ist als Koffer ausgebildet, der zur Vermeidung von Kälteverlusten rundum geschlossen ist. In den Seitenwänden 11 des Aufbaus sind Türen 12 angeschlagen, die zum Beladen des Kühlfahrzeuges und zur Entnahme des Gutes beim Kunden geöffnet werden. Der Koffer ist durch vertikale Trennwände in Fächer unterteilt, wobei jedes Fach durch eine Tür 12 verschlossen ist. Im dargestellten Ausführungsbeispiel ist jedes Fach noch durch zwei im Abstand zueinander stehende Fachböden 13, 14 in kleinere Einheiten unterteilt. Die Figur 1 zeigt deutlich, daß direkt oberhalb des Bodens ein Schubkasten 15 angeordnet ist. Dieser Schubkasten kann so weit aus dem Aufbau herausgezogen werden, daß für den Verkaufsfahrer einsehbar ist, welches Gut sich darin befindet. Er kann es kann zum Ausführen der Bestellung einzeln herausnehmen. In nicht näher dargestellter Weise sind die Schubkästen 15 nebeneinander in einer Reihe angeordnet, so daß gemäß der dargestellten Ausführung das untere Drittel des Laderaumes mit den Schubkästen 15 ausgefüllt ist. Diese Anordnung ist jedoch nicht notwendig, da die Anzahl der Schubkästen 15 variiert werden kann. Die vordere, den Seitenwänden 11 zugeordnete Blende jedes Schubkastens 15 ist mit einer Handhabe 16 im dargestellten Ausführungsbeispiel mit einer Griffmulde ausgestattet.

Die Erfindung ist nicht auf das dargestellte Ausführungsbeispiel beschränkt. Wesentlich ist, daß in dem Aufbau 10 des Kühlfahrzeuges Schubkästen angeordnet sind, die so angeordnet sind, daß eingesehen werden kann, welche Ware sich in den Schubkästen befindet. Die Anordnung der Schubkästen 15 sowie deren Anzahl kann von Fahrzeug zu Fahrzeug entsprechend den Wünschen des Käufers angepaßt werden.

## Patentansprüche

1. Kühlfahrzeug, insbesondere zum Ausliefern von Gefriergut, mit einem kofferartigen, durch Trennwände in Fächer unterteilten Aufbau, an dessen Wänden Türen angeschlagen sind, **dadurch gekennzeichnet, daß** im Laderaum Auszüge (15) vorgesehen sind, die zur Entnahme von gut aus dem von den Wänden begrenzten Laderaum herausziehbar sind.

2. Kühlfahrzeug nach Anspruch 1, **dadurch gekennzeichnet, daß** die Auszüge kastenförmig oder nach Art einer Schublade (15) gestaltet sind.

3. Kühlfahrzeug nach Anspruch 1 oder 2, **dadurch gekennzeichnet, daß** die Auszüge nebeneinander angeordnet sind.

4. Kühlfahrzeug nach einem oder mehreren der vorhergehenden Ansprüche 1 bis 3, **dadurch gekennzeichnet, daß** die Auszüge bzw. die Schubladen (15) im unteren Drittel des Laderaumes, vorzugsweise jedoch direkt über dem Boden angeordnet sind.

5. Kühlfahrzeug nach einem oder mehreren der vorhergehenden Ansprüche, **dadurch gekennzeichnet, daß** die den Seitenwänden zugeordneten Blenden des Auszuges bzw. der Schublade (15) mit Handhaben ausgestattet sind.

6. Kühlfahrzeug nach einem oder mehreren der vorhergehenden Ansprüche 1 bis 5, **dadurch gekennzeichnet, daß** die Auszüge bzw. die Schubladen (15) aus Blech oder aus einem Kunststoff im Spritzgießverfahren gefertigt sind.

7. Kühlfahrzeug nach einem oder mehreren der vorhergehenden Ansprüche 1 bis 6, **dadurch gekennzeichnet, daß** ein durch Trennwände gebildetes Fach durch Fachböden (13, 14) unterteilt ist, und daß die Höhe einer Schublade (15) mit dem Abstand von zwei übereinander angeordneten Fachböden übereinstimmt oder annähernd übereinstimmt, vorzugsweise jedoch ein klein wenig geringer ist.
